(19) Europäisches Patentamt
European Patent Office
Office européen des brevets

(11) **EP 4 438 578 A1**

(12) **EUROPÄISCHE PATENTANMELDUNG**

(43) Veröffentlichungstag:
**02.10.2024 Patentblatt 2024/40**

(21) Anmeldenummer: 23164346.1

(22) Anmeldetag: **27.03.2023**

(51) Internationale Patentklassifikation (IPC):
***C04B 26/06*** *(2006.01)*

(52) Gemeinsame Patentklassifikation (CPC):
(C-Sets verfügbar)
**C04B 26/06;** C04B 2111/00491; C04B 2111/00517;
C04B 2111/00568 (Forts.)

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **STO SE & Co. KGaA
79780 Stühlingen (DE)**

(72) Erfinder:
• **Fraunhoffer, Dominik
78166 Donaueschingen (DE)**

• **Sauter, Elisabeth
78250 Tengen (DE)**
• **Hitzler, Martin
78244 Gottmadingen (DE)**

(74) Vertreter: **Gottschalk, Matthias
Gottschalk Maiwald
Patentanwalts- und Rechtsanwalts- (Schweiz)
GmbH
Florastrasse 14
8008 Zürich (CH)**

(54) **PUTZMASSE, PUTZSCHICHT SOWIE PUTZSYSTEM**

(57) Die Erfindung betrifft eine Putzmasse zur Ausbildung einer ein- oder mehrlagigen Putzschicht, insbesondere einer Armierungsschicht, enthaltend
- mindestens ein Polymerbindemittel,
- Füllstoffe,
- Additive und
- Wasser,
wobei die Füllstoffe in einer mindestens trimodalen Partikelgrößenverteilung vorliegen, umfassend
- mindestens einen Grobfüllstoff mit einer mittleren Partikelgröße D50 von 100-500 µm, vorzugsweise 140-400 µm, weiterhin vorzugsweise 160-350 µm,

- mindestens einen Feinfüllstoff mit einer mittleren Partikelgröße D50 von 30-100 µm, vorzugsweise 35-90 µm, weiterhin vorzugsweise 40-75 µm und
- mindestens einen Feinstfüllstoff mit einer mittleren Partikelgröße D50 von 1-30 µm, vorzugsweise 2-26 µm, weiterhin vorzugsweise 2-24 µm,
und wobei der mindestens eine Feinfüllstoff ein Leichtfüllstoff mit einer Kornrohdichte nach DIN EN 1097-6 unter 500 kg/m$^3$, vorzugsweise unter 400 kg/m$^3$, weiterhin vorzugsweise unter 300 kg/m$^3$, ist.
Die Erfindung betrifft ferner eine ein- oder mehrlagige Putzschicht sowie ein Putzsystem.

Figur

EP 4 438 578 A1

(52) Gemeinsame Patentklassifikation (CPC): (Forts.)

C-Sets
**C04B 26/06, C04B 14/06, C04B 14/108,
C04B 14/12, C04B 14/16, C04B 14/18,
C04B 14/185, C04B 14/20, C04B 14/204,
C04B 14/24, C04B 14/28, C04B 20/002,
C04B 20/008, C04B 20/0096, C04B 24/2641,
C04B 2103/0057;
C04B 26/06, C04B 14/06, C04B 14/108,
C04B 14/12, C04B 14/16, C04B 14/18,
C04B 14/185, C04B 14/20, C04B 14/204,
C04B 14/24, C04B 14/28, C04B 20/002,
C04B 20/008, C04B 20/0096, C04B 2103/0057,
C04B 2103/44**

**Beschreibung**

Die Erfindung betrifft eine Putzmasse zur Ausbildung einer ein- oder mehrlagigen Putzschicht, insbesondere einer Armierungsschicht. Des Weiteren betrifft die Erfindung eine aus einer erfindungsgemäßen Putzmasse ausgebildete ein- oder mehrlagige Putzschicht, insbesondere Armierungsschicht.

Bevorzugter Anwendungsbereich der Erfindung sind Wärmedämmverbundsysteme, die eine Dämmschicht, eine Armierungsschicht als Unterputz und einen Oberputz umfassen. Die auf die Dämmschicht aufgebrachten Putzschichten bilden dabei ein Putzsystem aus. Erfindung betrifft daher ferner ein Putzsystem mit einer aus einer erfindungsgemäßen Putzmasse ausgebildeten ein- oder mehrlagigen Putzschicht.

Stand der Technik

Im Fertighausbau werden gedämmte Wandelemente im Werk vorgefertigt und auf der Baustelle nur noch versetzt. Bei einem Wandelement mit Wärmedämmverbundsystem wird dieses ebenfalls bereits im Werk aufgebracht, so dass die Aufbringung unter definierten Umgebungsbedingungen, insbesondere hinsichtlich Temperatur und/oder Luftfeuchtigkeit, erfolgt. In einer Fertigungshalle können zudem Bedingungen geschaffen werden, die ein schnelles Trocknen der aufgebrachten Putzschichten des Wärmedämmverbundsystems fördern. Auf diese Weise kann schneller mit dem nächsten Verarbeitungsschritt, der Zwischenlagerung und/oder dem Abtransport begonnen werden, so dass die Verweilzeit des vorgefertigten Wandelements in der Fertigungshalle verkürzt und ein hoher Durchsatz erzielt wird.

Zur weiteren Steigerung des Durchsatzes ist bereits vorgeschlagen worden, die Trocknung organisch gebundener Armierungsschichten über flüchtige Lösemittel, wie beispielsweise 1-Methoxy-2-propanol, das eine Verdunstungszahl unter 80 aufweist, zu beschleunigen. Hierbei traten jedoch neue Probleme auf, insbesondere eine starke Geruchsbelästigung in der Fertigungshalle.

Alternativ ist versucht worden, die Trocknung von Armierungsschichten durch einen erhöhten Festkörperanteil in der Putzmasse zu beschleunigen. Dies führte jedoch zu einer Verschlechterung der Verarbeitungseigenschaften, beispielsweise in Bezug auf die offene Zeit der Putzmasse. Darüber hinaus verschlechterte sich das Aufziehverhalten der Putzmasse.

Die vorliegende Erfindung ist mit der Aufgabe befasst, eine Putzmasse zur Ausbildung einer ein- oder mehrlagigen Putzschicht, insbesondere einer Armierungsschicht, anzugeben, die schnell trocknet und somit im Fertighausbau hohe Durchsätze ermöglicht. Zugleich soll die Putzmasse gute Verarbeitungseigenschaften aufweisen und möglichst geruchsneutral sein.

Zur Lösung der Aufgabe wird die Putzmasse mit den Merkmalen des Anspruchs 1 vorgeschlagen. Vorteilhafte Weiterbildungen der Erfindung sind den Unteransprüchen zu entnehmen. Darüber hinaus werden eine ein- oder mehrlagige Putzschicht sowie ein Putzsystem angegeben.

Offenbarung der Erfindung

Die vorgeschlagene Putzmasse zur Ausbildung einer ein- oder mehrlagigen Putzschicht, insbesondere einer Armierungsschicht, enthält

- mindestens ein Polymerbindemittel,
- Füllstoffe,
- Additive und
- Wasser.

Die Füllstoffe liegen dabei in einer mindestens trimodalen Partikelgrößenverteilung vor, umfassend

- mindestens einen Grobfüllstoff mit einer mittleren Partikelgröße D50 von 100-500 $\mu$m, vorzugsweise 140-400 $\mu$m, weiterhin vorzugsweise 160-350 $\mu$m,
- mindestens einen Feinfüllstoff mit einer mittleren Partikelgröße D50 von 30-100 $\mu$m, vorzugsweise 35-90 $\mu$m, weiterhin vorzugsweise 40-75 $\mu$m und
- mindestens einen Feinstfüllstoff mit einer mittleren Partikelgröße D50 von 1-30 $\mu$m, vorzugsweise 2-26 $\mu$m, weiterhin vorzugsweise 2-24 $\mu$m.

Der mindestens eine Feinfüllstoff ist dabei ein Leichtfüllstoff mit einer Kornrohdichte nach DIN EN 1097-6 unter 500 kg/m$^3$, vorzugsweise unter 400 kg/m$^3$, weiterhin vorzugsweise unter 300 kg/m$^3$.

Der D50-Wert, der auch Halbwertskorngröße oder Medianwert genannt wird, gibt die mittlere Partikelgröße eines Füllstoffs an, so dass der Anteil der Partikel, die größer als der D50-Wert sind, gleich dem Anteil der Partikel ist, die kleiner als der D50-Wert sind. Die Bestimmung dieser Werte erfolgt bevorzugt nach DIN ISO 9276-1:2004-09 (Darstellung der Ergebnisse von Partikelgrößenanalysen - Teil 1: grafische Darstellung) und ISO 9276-2:2014-05 (Darstellung der Ergebnisse von Partikelgrößenanalysen - Teil 2: Berechnungen von mittleren Partikelgrößen/- durchmessern und Momenten aus Partikelgrößenverteilungen). Dabei kann der Mastersizer 3000 der Firma Malvern Instruments Limited als Instrument zur Größenbestimmung eingesetzt werden. In der Regel können diese Werte aber auch einfach einem technischen Datenblatt entnommen werden.

Die vorgeschlagene Füllstoffkombination mit den angegebenen D50-Werten ermöglicht eine besonders dichte Packung der Füllstoffe, da sich die Feinfüllstoffe in die verbleibenden Räume zwischen den Grobfüllstoffen und die Feinstfüllstoffe in die verbleibenden Räume zwischen den Grobfüllstoffen und den Feinfüllstoffen setzen. Je dichter die Packung ist, desto weniger Polymerbindemittel und damit Wasser wird benötigt, da weniger Raum zur Verfügung steht, der mit Polymerbindemittel und mit Wasser gefüllt werden kann. Je weniger Wasser in der Putzmasse enthalten ist, desto weniger Wasser muss beim Trocknen einer aus der Putzmasse hergestellten Putzschicht verdunsten. Im Ergebnis kann so die Trocknung beschleunigt werden.

Zur Festlegung der mittleren Partikelgrößen (D50-Wert) der enthaltenen Füllstoffe mit mindestens trimodaler Partikelgrößenverteilung kann vom D50-Wert der Fraktion der Grobfüllstoffe ausgegangen werden. Denn die Grobfüllstoffe bilden innerhalb der Packung eine Art Grundgerüst aus. In diesem Grundgerüst verbleiben zwischen den Grobfüllstoffen Räume, deren Größe sich berechnen lässt, so dass hiernach die Größe der Feinfüllstoffe festlegbar ist. Dies gilt analog für die Räume, die zwischen den Grob- und den Feinfüllstoffen verbleiben und mit Feinstfüllstoffen gefüllt werden sollen.

Bei der Berechnung der verbleibenden Räume zwischen den Füllstoffen können die Partikel einer Größenfraktion vereinfacht bzw. modellhaft als Kugeln gleicher Größe betrachtet werden, wobei die Größe dem jeweiligen D50-Wert entspricht. In der Realität weicht die Form der Partikel von der Kugelform ab. Zudem haben nicht alle Füllstoffe einer Größenfraktion die gleiche Größe, sondern liegen ebenfalls in einer Größenverteilung vor. All dies kann jedoch bei der Berechnung der verbleibenden Räume bzw. bei der Bestimmung der mittleren Partikelgröße D50 der einzelnen Größenfraktionen vernachlässigt werden.

In einer möglichst dichten Kugelpackung bilden sich Tetraederlücken und Oktaederlücken aus. In eine Oktaederlücke zwischen zwei Partikeln/Kugeln eines Grobfüllstoffs mit dem Durchmesser D passt eine kleinere Kugel mit einem Durchmesser d, wenn d im Bereich 0,155*D und 0,414*D liegt. Maßgebender sind jedoch die Tetraederlücken. In eine Tetraederlücke zwischen zwei Partikeln/Kugeln eines Grobfüllstoffs mit dem Durchmesser D passt eine kleinere Kugel mit einem Durchmesser d, wenn d im Bereich 0,225*D und 0,291*D liegt.

Verallgemeinernd lässt sich sagen, dass der D50-Wert des Feinfüllstoffs zwischen 0,155 und 0,414, vorzugsweise zwischen 0,225 und 0,414, weiterhin vorzugsweise zwischen 0,225 und 0,291, des D50-Werts des Grobfüllstoffs liegen sollte, um eine möglichst dichte Packung zu erhalten.

Des Weiteren bevorzugt weisen die D50-Werte der einzelnen Füllstofffraktionen, und zwar Feinstfüllstoff : Feinfüllstoff : Grobfüllstoff, ein Größenverhältnis von 1 : 3-10 : 15-40 auf. Dadurch ist sichergestellt, dass der Feinstfüllstoff die zwischen dem Grobfüllstoff und dem Feinfüllstoff verbleibenden Lücken bzw. Räume füllt.

Eine dichte Füllstoffpackung in einer Putzmasse führt normalerweise dazu, dass die Putzmasse bzw. eine aus der Putzmasse hergestellte ein- oder mehrlagige Putzschicht sehr "schwer" wird. Um dies zu verhindern, weist die erfindungsgemäße Putzmasse einen Leichtfüllstoff als Feinfüllstoff auf. Bei dem Leichtfüllstoff kann es sich beispielsweise um Bims, Perlit, insbesondere expandierter Perlit, Blähglas, Blähton, Blähschiefer, Blähglimmer, insbesondere geblähtes oder geschäumtes Vermiculit, und/oder um Hohlglaskugeln handeln. Es könne auch Leichtfüllstoffgemische eingesetzt werden. Sofern unterschiedliche Feinfüllstoffe bzw. Feinfüllstoffarten enthalten sind, sind vorzugsweise alle Feinfüllstoffe zugleich Leichtfüllstoffe.

Weiterhin vorzugsweise enthält nur der mindestens eine Feinfüllstoff einen Leichtfüllstoff, das heißt, dass in den anderen Füllstofffraktionen kein Leichtfüllstoff enthalten ist. Denn würde der mindestens eine Grobfüllstoff einen Leichtfüllstoff enthalten, würde dies die Festigkeit der einzelnen Partikel des Grobfüllstoffs und damit der späteren Putzschicht beeinträchtigen. Würde der mindestens eine Feinstfüllstoff einen Leichtfüllstoff enthalten, würde dies die Ölzahl des Füllstoffs erhöhen und damit den Bindemittelbedarf. Im Ergebnis würde sich dadurch die Trocknung einer aus der Putzmasse ausgebildeten Putzschicht wieder verlangsamen.

Die Ölzahl nach DIN EN ISO 787-5 des mindestens einen in der Putzmasse enthaltenen Feinstfüllstoffs sollte daher möglichst niedrig sein, wobei eine niedrige Ölzahl auf eine nodulare kompakte Partikelform hinweist. Vorzugsweise liegt die Ölzahl nach DIN EN ISO 787-5 zwischen 5 und 30, weiterhin vorzugsweise zwischen 6 und 25 und besonders bevorzugt zwischen 8 und 20.

Als Feinstfüllstoff können silikatische, karbonatische, oxidische, hydroxidische und/oder sulfatische Füllstoffe, wie beispielsweise Quarz, Cristobalit, Kalkstein, Marmor, Dolomit, Aluminiumhydroxid und/oder Erdalkalisulfate, eingesetzt werden. Für alle Größenfraktion gilt, dass nicht nur ein Füllstoff bzw. eine Füllstoffart eingesetzt werden kann, sondern auch eine Füllstoffmischung aus verschiedenen Füllstoffen.

Als Grobfüllstoff können insbesondere silikatische und/oder karbonatische Füllstoffe, wie Quarz, Cristobalit, Kalkstein, Marmor und/oder Dolomit, eingesetzt werden. Die Mohs-Härte des Grobfüllstoffs sollte dabei mindestens 3 betragen, um eine ausreichende Festigkeit der aus der Putzmasse ausgebildeten Putzschicht zu erzielen.

Des Weiteren wird vorgeschlagen, dass der Leichtfüllstoff eine mittlere Kornfestigkeit nach DIN EN 13055-1 von mindestsens 1,2 N/mm², vorzugsweise mindestens 1,6 N7mm², weiterhin vorzugsweise mindestens 1,8 N/mm², aufweist. Bevorzugt sind die Leichtfüllstoffpartikel zumindest annähernd kugelförmig, da die Kugelform die Druck- und damit die Bruchfestigkeit der einzelnen Partikel steigert.

Da Leichtfüllstoffpartikel in der Regel porös sind und demnach keine geschlossene Partikeloberfläche aufweisen, weisen sie eine vergleichsweise hohe Ölzahl auf. Das heißt, dass durch die Verwendung von Leichtfüllstoffen der Bindemittelbedarf steigt.

Da mit dem Bindemittelanteil der Wasseranteil in der Putzmasse steigt, wirkt sich dies negativ auf das Trocknungsverhalten einer aus der Putzmasse ausgebildeten Putzschicht aus. Als weiterbildende Maßnahme wird daher vorgeschlagen, dass der Leichtfüllstoff ein Hydrophobierungsmittel zur Hydrophobierung der Oberfläche der Leichtfüllstoffpartikel enthält. Mit Hilfe des Hydrophobierungsmittels wird der Leichtfüllstoff hydrophob eingestellt, so dass der Bindemittelbedarf wieder gesenkt wird. Alternativ oder ergänzend kann bzw. können ein geschlossenzelliger Leichtfüllstoff mit geschlossener Oberfläche und/oder Hohlglaskugeln verwendet werden.

Bevorzugt sind in einer erfindungsgemäßen Putzmasse, jeweils bezogen auf das Gesamtgewicht der Ausgangsstoffe, enthalten:

- 50-75 Gew.-%, vorzugsweise 50-70 Gew.-%, weiterhin vorzugsweise 55-70 Gew.-% des mindestens einen Grobfüllstoffs,
- 1-10 Gew.-%, vorzugsweise 1-7 Gew.-%, weiterhin vorzugsweise 1-5 Gew.-% des mindestens einen Feinfüllstoffs
- 5-25 Gew.-%, vorzugsweise 5-20 Gew.-%, weiterhin vorzugsweise 6-15 Gew.-% des mindestens einen Feinstfüllstoffs.

Die angegebenen Gewichtsanteile der einzelnen Füllstofffraktionen in der vorgeschlagenen Putzmasse ergeben eine möglichst dichte Füllstoffpackung. Idealerweise ist der Feinstfüllstoffanteil dabei gerade so hoch gewählt, dass nicht alle Lücken und Hohlräume zwischen den gröberen Füllstoffpartikeln mit dem mindestens einen Feinstfüllstoff gefüllt werden. Dadurch ist sichergestellt, dass eine aus der Putzmasse ausgebildete Putzschicht wasserdampfdurchlässig bleibt bzw. "atmen" kann. Das heißt, dass auch das Bindemittel die Lücken und Hohlräume nicht vollständig füllen sollte. Es kommt demnach auch auf den Bindemittelanteil an.

Eine relevante Größe in diesem Zusammenhang stellt die Pigmentvolumenkonzentration PVK dar. Die PVK bezeichnet das Verhältnis des Volumens der enthaltenen Pigmente und Füllstoffe zum Gesamtvolumen an nichtflüchtigen Bestandteilen, in der Regel Pigmente, Füllstoffe und Bindemittel. Sie ist demnach eine wesentliche Größe zur Charakterisierung des Volumenverhältnisses von Pigment und Füllstoff zum Bindemittel. Je niedriger die PVK ist, desto höher ist in der Regel der Bindemittelanteil.

Für die Bestimmung der PVK kann Rückgriff auf die DIN EN ISO 4618:2015-01 genommen werden. Zur Berechnung der PVK kann die folgende Formel verwendet werden:

$$\text{PVK } [\%] = (\sum V_{\text{Pigmente}} + \sum V_{\text{Füllstoffe}} / \sum V_{\text{Pigmente}} + \sum V_{\text{Füllstoffe}} + \sum V_{\text{Bindemittel}}) \text{ x } 100$$

Eine weitere wesentliche Größe stellt die kritische Pigmentvolumenkonzentration KPVK dar. In der DIN EN ISO 4618:2015 wird die KPVK als ein bestimmter Wert der PVK definiert, bei dem die Hohlräume zwischen den sich berührenden Feststoffpartikel einer Beschichtung gerade noch mit Bindemittel gefüllt sind. Oberhalb der KPVK (überkritischer Bereich) sind demnach nicht alle Hohlräume mit Bindemittel gefüllt. Unterhalb der KPVK (unterkritischer Bereich), sind alle Hohlräume mit Bindemittel gefüllt.

Die üblicherweise in einer Putzmasse enthaltene grobe Körnung führt zur Ausbildung von Lufteinschlüssen, die nicht gefüllt sind, so dass die PVK einer aus einer herkömmlichen Putzmasse hergestellten Putzschicht stets im überkritischen Bereich anzufinden ist. Bei Putzmassen bzw. Putzschichten sind daher Angaben zur PVK in der Regel entbehrlich. Die Angabe der PVK ergibt erst einen Sinn, wenn die Beschichtung feinteilige Pigmente und Füllstoffe enthält, so dass hieraus eine dichte Packung der Pigmente und Füllstoffe resultiert. Dies ist bei Farben und Lacken sowie der vorliegend vorgeschlagenen Putzmasse der Fall.

Eine dichte Packung der Füllstoffe führt zu kleinen Lücken bzw. Hohlräumen, so dass per se der Bindemittelbedarf zum Füllen der Lücken bzw. Hohlräume gering ist. Das heißt, dass sich die KPVK zu einem höheren Wert hin verschiebt. Mit einer PVK von vorzugsweise 75-95%, weiterhin vorzugsweise von 80-90% liegt die vorgeschlagene Putzmasse im überkritischen Bereich. Das heißt, dass gemäß der weiter oben angegebenen Definition nicht alle Lücken und Hohlräume mit Bindemittel gefüllt sind bzw. ein "bindemittelarmes" System vorliegt. Durch die verbleibenden Lücken und Hohlräume ist eine aus der Putzmasse ausgebildete Putzschicht - trotz der dichten Füllstoffpackung - weiterhin wasserdampfdurchlässig.

Bevorzugt beträgt daher der Feststoffanteil des mindestens einen Polymerbindemittels, bezogen auf das Gesamtgewicht der Ausgangsstoffe, 4-15 Gew.-%, vorzugsweise 4-12 Gew.-%, weiterhin vorzugsweise 5-10 Gew.-%.

Des Weiteren bevorzugt ist das mindestens eine Polymerbindemittel ein Polymerbindemittel auf Basis von Vinylacetat/Ethylen-Copolymeren, Copolymeren auf Basis von Vinylaromaten, insbesondere Styrol, und Acrylaten und/oder Homo-, Co- oder Terpolymeren auf Basis von Reinacrylaten, insbesondere auf Basis von Styrolacrylatcopolymeren, und/oder Reinacrylate umfassend Homo- oder Copolymere von Acrylaten und/oder Methacrylaten, gegebenenfalls mit Acryl- und/oder Methacrylsäure als Comonomerbaustein, enthalten. Besonders bevorzugt werden Homo- oder Copolymere auf Basis von Reinacrylaten und/oder auf Basis von Styrolacrylatcopolymeren.

Ferner bevorzugt weist das mindestens eine Polymerbindemittel eine Mindestfilmtemperatur unter 15°C, vorzugsweise unter 12°C, weiterhin vorzugsweise unter 9°C auf. Die vergleichsweise niedrige Mindestfilmtemperatur ermöglicht den Verzicht auf die Zugabe eines Filmbildehilfsmittels. Dies gilt insbesondere, wenn - wie im Fertighausbau üblich - die Putzmasse in einer Fertigungshalle, das heißt bei warmen Temperaturen, appliziert wird. Filmbildehilfsmittel weisen oft eine geringe Verdunstungszahl auf, in der Regel unter 80, so dass sie schneller verdampfen als Wasser, dessen Verdunstungszahl bei 80 liegt. Bei der Verdunstungszahl handelt es sich um eine Maßzahl für die Flüchtigkeit von Flüssigkeiten, die für die Beurteilung von Löse-, Verdünnungs- und Verschnittmitteln von Bedeutung ist. Als Basis dient die Verdunstungszahl von Diethylether, die mit 1 angegeben wird. Filmbildehilfsmittel mit einer Verdunstungszahl von kleiner 80 in einer Putzmasse sollten daher die Trocknung einer aus der Putzmasse ausgebildeten Putzschicht beschleunigen. Überraschenderweise hat sich jedoch gezeigt, dass es sich genau umgekehrt verhält. Dies könnte darauf zurückzuführen sein, dass es bei einer Mischung eines Filmbildehilfsmittels mit Wasser zu einer Dampfdruckerniedrigung und einer daraus resultierenden Erhöhung des Siedepunkts kommt.

Gleiches gilt im Übrigen in Bezug auf Co-Lösemittel, so dass vorteilhafterweise nicht nur auf die Zugabe von Filmbildehilfsmittel, sondern auch auf die Zugabe von Co-Lösemittel verzichtet wird. Durch den Verzicht auf Co-Lösemittel wird zudem das eingangs erwähnte Problem der Geruchsbelästigung gelöst, das auf hohe VOC-Werte, das heißt auf einen hohen Anteil an flüchtigen organischen Verbindungen (engl.: "volatile organic compounds") zurückzuführen ist.

Da nicht ausgeschlossen werden kann, dass geringe Mengen an Filmbildehilfsmittel und/oder Co-Lösemittel durch andere Rezepturbestandteile eingeschleppt werden, wird in Weiterbildung der Erfindung vorgeschlagen, dass jeweils bezogen auf das Gesamtgewicht der Ausgangsstoffe

- weniger als 0,5 Gew.-%, vorzugsweise weniger als 0,3 Gew.-%, weiterhin vorzugsweise weniger als 0,1 Gew.-%, Filmbildehilfsmittel und/oder
- weniger als 0,5 Gew.-%, vorzugsweise weniger als 0,3 Gew.-%, weiterhin vorzugsweise weniger als 0,1 Gew.-%, Co-Lösemittel

enthalten ist bzw. sind.

Ferner wird vorgeschlagen, dass die Putzmasse einen Verdicker auf Acrylat-Basis als Additiv enthält. Durch Zugabe des Verdickers können die rheologischen Eigenschaften und damit die Verarbeitungseigenschaften der Putzmasse gesteuert werden.

Der Verdicker auf Acrylat-Basis ersetzt vorzugsweise einen Verdicker auf Cellulose-Basis, das heißt, dass auf die aktive Zugabe eines Verdickers auf Cellulose-Basis verzichtet wird. Denn Verdicker auf Cellulose-Basis haben die Eigenschaft, Wasser zu binden, so dass sie in anderen Systemen häufig als Wasserrückhaltemittel eingesetzt werden. Die Zugabe eines Verdickers auf Cellulose-Basis würde demnach die Trocknung der Putzmasse bzw. einer hieraus ausgebildeten Putzschicht verlangsamen.

Bevorzugt sind in der vorgeschlagenen Putzmasse 0,1-2,0 Gew.-% des Verdickers auf Acrylat-Basis bezogen auf das Gesamtgewicht der Ausgangsstoffe enthalten.

Des Weiteren bevorzugt sind in der Putzmasse weitere Additive enthalten, beispielsweise Konservierungsmittel, Fasern, Netz-/Dispergiermittel, Entschäumer und/oder Hydrophobierungsmittel. Der Anteil der weiteren Additive beträgt vorzugsweise 0,1-5,0 Gew.-% bezogen auf das Gesamtgewicht der Ausgangsstoffe.

Eine erfindungsgemäße Putzmasse enthält demnach bevorzugt:

| | |
|---|---|
| 4,0-15,0 Gew.-% | mindestens eines Polymerbindemittels (Feststoff) |
| 50,0-75,0 Gew.-% | mindestens eines Grobfüllstoffs |
| 1,0-10,0 Gew.-% | mindestens eines Feinfüllstoffs |
| 5,0-25,0 Gew.-% | mindestens eines Feinstfüllstoffs |
| 5,0-25,0 Gew.-% | Wasser |
| 0,1-2,0 Gew.-% | Verdicker |
| 0,1-5,0 Gew.-% | weitere Additive |

jeweils bezogen auf das Gesamtgewicht der Ausgangsstoffe.

Eine aus der Putzmasse ausgebildete Putzschicht zeichnet sich dadurch aus, dass sie schnell trocknet. Die Putzmasse kann daher insbesondere im Fertighausbau eingesetzt werden, da sie einen höheren Durchsatz bei der Vorfertigung von Wandelementen ermöglicht. Dies gilt insbesondere bei Verwendung der Putzmasse zur Ausbildung einer ein- oder mehrlagigen Armierungsschicht, da diese in der Regel erst trocknen muss, bevor der nächste Verarbeitungsschritt erfolgen und/oder das Wandelement verladen bzw. abtransportiert werden kann.

Vorgeschlagen wird daher ferner eine ein- oder mehrlagige Putzschicht, insbesondere Armierungsschicht, aus einer erfindungsgemäßen Putzmasse. Aufgrund der Zusammensetzung der Putzmasse trocknet die ein- oder mehrlagige Putzschicht sehr schnell, so dass zügig der nächste Verarbeitungsschritt und/oder der Abtransport erfolgen kann bzw. können.

Armierungsschicht und Oberputzschicht bilden ein Putzsystem aus. Des Weiteren wird daher ein Putzsystem vorgeschlagen, das eine aus einer erfindungsgemäßen Putzmasse ausgebildete ein- oder mehrlagige Putzschicht, insbesondere Armierungsschicht, sowie mindestens eine weitere Putzschicht, vorzugsweise eine Oberputzschicht, umfasst. Das Putzsystem kann insbesondere im Fertighausbau eingesetzt werden, um den Durchsatz bei der Vorfertigung von Wandelementen zu erhöhen. Das Putzsystem kann insbesondere auf eine Dämmschicht aufgebracht sein, so dass ein Wärmedämmverbundsystem ausgebildet wird.

Anhand eines konkreten Ausführungsbeispiels werden nachfolgend die Vorteile der Erfindung aufgezeigt. Das Ausführungsbeispiel gibt eine erfindungsgemäße Putzmasse zur Ausbildung einer ein- oder mehrlagigen Putzschicht, insbesondere einer ein- oder mehrlagigen Armierungsschicht an.

Ausführungsbeispiel

| | |
|---|---|
| 7,0 Gew.-% | Polymerbindemittel auf Reinacrylat-Basis (Feststoff) |
| 25,0 Gew.-% | Quarzsand (Grobfüllstoff, Körnung 0,1-0,2 mm) |
| 37,0 Gew.-% | Quarzsand (Grobfüllstoff, Körnung 0,1-0,4 mm) |
| 2,5 Gew.-% | Geblähter Perlit (Feinfüllstoff) |
| 10,0 Gew.-% | Calciumcarbonat (Feinstfüllstoff) |
| 16,7 Gew.-% | Wasser |
| 0,0 Gew.-% | Filmbildehilfsmittel/Co-Lösemittel |
| 0,3 Gew.-% | Verdicker auf Acrylat-Basis |
| 0,0 Gew.-% | Verdicker auf Cellulose-Basis |
| 1,5 Gew.-% | weitere Additive |
| 100 Gew.-% | |

Zur Herstellung einer erfindungsgemäßen Putzmasse wurden alle Ausgangsstoffe homogen gemischt. Die Putzmasse wurde anschließend in einer Schichtstärke von 2,0 mm auf eine Platte aus expandiertem Polystyrol aufgebracht und in einem Konstantklimaraum bei einer Umgebungstemperatur von 23°C und einer relativen Feuchte von 50% bis zur Gewichtskonstanz getrocknet. Die Trocknung bzw. das Verdunsten von Wasser wurde gravimetrisch verfolgt. Die Putzmasse gilt als getrocknet, wenn bis zum Erreichen der Gewichtskonstanz der 98%-Wert überschritten wurde. Die Trocknungszeit betrug im vorliegenden Fall etwa acht Stunden.

Zum Vergleich wurden weitere Putzmassen aus den nachfolgend genannten Rezepturen als Referenzbeispiel 1 und 2 hergestellt.

Referenzbeispiel 1

| | |
|---|---|
| 7,0 Gew.-% | Polymerbindemittel auf Reinacrylat-Basis (Feststoff) |
| 25,0 Gew.-% | Quarzsand (Grobfüllstoff, Körnung 0,1-0,2 mm) |
| 37,0 Gew.-% | Quarzsand (Grobfüllstoff, Körnung 0,1-0,4 mm) |
| 0,0 Gew.-% | Geblähter Perlit (Feinfüllstoff) |
| 12,5 Gew.-% | Calciumcarbonat (Feinstfüllstoff) |
| 16,7 Gew.-% | Wasser |

(fortgesetzt)

| | |
|---|---|
| 0,0 Gew.-% | Filmbildehilfsmittel/Co-Lösemittel |
| 0,3 Gew.-% | Verdicker auf Acrylat-Basis |
| 0,0 Gew.-% | Verdicker auf Cellulose-Basis |
| 1,5 Gew.-% | weitere Additive |
| 100 Gew.-% | |

Im Unterschied zur erfindungsgemäßen Putzmasse war kein Feinfüllstoff, insbesondere kein Feinfüllstoff in Form eines Leichtfüllstoffs enthalten. Stattdessen wurde der Anteil an Feinstfüllstoff erhöht.

Aus der Putzmasse wurde in gleicher Weise wie zuvor beschrieben eine Putzschicht ausgebildet und getrocknet. Die Trocknungszeit hier lag bei etwa 11,5 Stunden.

Referenzbeispiel 2

| | |
|---|---|
| 7,0 Gew.-% | Polymerbindemittel auf Reinacrylat-Basis (Feststoff) |
| 25,0 Gew.-% | Quarzsand (Grobfüllstoff, Körnung 0,1-0,2 mm) |
| 37,0 Gew.-% | Quarzsand (Grobfüllstoff, Körnung 0,1-0,4 mm) |
| 0,0 Gew.-% | Geblähter Perlit (Feinfüllstoff) |
| 12,5 Gew.-% | Calciumcarbonat (Feinstfüllstoff) |
| 15,2 Gew.-% | Wasser |
| 1,5 Gew.-% | Filmbildehilfsmittel/Co-Lösemittel |
| 0,0 Gew.-% | Verdicker auf Acrylat-Basis |
| 0,3 Gew.-% | Verdicker auf Cellulose-Basis |
| 1,5 Gew.-% | weitere Additive |
| 100 Gew.-% | |

Im Unterschied zur erfindungsgemäßen Putzmasse war auch hier kein Feinfüllstoff, insbesondere kein Feinfüllstoff in Form eines Leichtfüllstoffs enthalten. Stattdessen wurde der Anteil an Feinstfüllstoff erhöht. Zusätzlich wurden noch ein Filmbildehilfsmittel/Co-Lösemittel sowie ein Verdicker auf Cellulose-Basis zugegeben.

Aus dieser Putzmasse wurde in gleicher Weise wie zuvor beschrieben eine Putzschicht ausgebildet und getrocknet. Die Trocknungszeit hier lag bei über 22 Stunden.

Weitere Unterschiede zwischen der Putzschicht, die aus der Putzmasse gemäß dem Ausführungsbeispiel hergestellt wurde, und den Putzschichten, die aus den Putzmassen gemäß der Referenzbeispiele hergestellt wurden, konnten bezüglich der Shore A-Härte nach ISO 7619:2012-02 festgestellt werden. Die Shore A-Härte, ab der eine Putzschicht als überarbeitbar oder verladbar angesehen werden kann, liegt bei > 75. Für die hergestellten Putzschichten konnten folgende Zeitabläufe bis zum Erreichen einer Shore A-Härte > 75 ermittelt werden:

Putzschicht aus der Putzmasse gemäß dem Ausführungsbeispiel: 11,5 Stunden.
Putzschicht aus der Putzmasse gemäß dem Referenzbeispiel 1: 14 Stunden.
Putzschicht aus der Putzmasse gemäß dem Referenzbeispiel 2: 17,5 Stunden.

Die Vorteile der Erfindung werden nachfolgend anhand der einzigen beigefügten Figur beschrieben. Diese zeigt eine Graphik, welcher die unterschiedlichen Trocknungszeiten der Putzmassen gemäß Ausführungsbeispiel sowie gemäß der beiden Referenzbeispiele zu entnehmen sind.

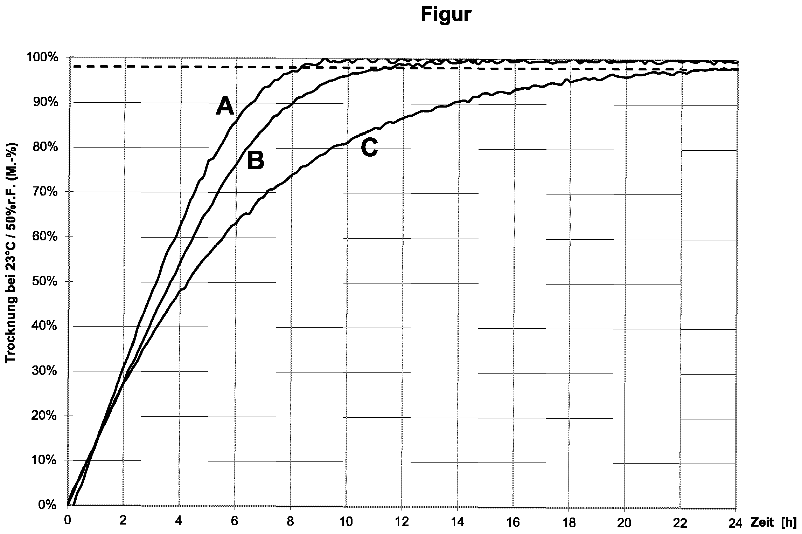

Ausführliche Beschreibung der Figur

Der Figur bzw. Graphik sind drei Kurven zu entnehmen. Die Kurve A zeigt den Trocknungsverlauf der erfindungsgemäßen Putzmasse gemäß dem angegebenen Ausführungsbeispiel. Die Kurve B zeigt den Trocknungsverlauf der Putzmasse gemäß dem Referenzbeispiel 1 und die Kurve C den Trocknungsverlauf der Putzmasse gemäß dem Referenzbeispiel 2. Ferner ist der 98%-Wert durch eine gestrichelte Linie angegeben. Erreicht eine Kurve den 98%-Wert sind 98% der jeweiligen Putzmasse getrocknet. Das heißt, dass die Putzmasse als getrocknet gilt.

Die Trocknung kann insbesondere gravimetrisch bestimmt werden. Hierbei kann wie folgt vorgegangen werden: Die Putzmasse wird auf eine tarierte EPS-Platte in der gewünschten Schichtstärke aufgebracht. Anschließend wird das Gewicht der EPS-Platte einschließlich der aufgebrachten Putzmasse ermittelt und notiert. Dann wird die Platte unter festgelegten Konditionen bis zur Massenkonstanz auf einer Waage mit Datenlogger getrocknet, wobei alle 10 Minuten das Gewicht erfasst wird. Das Ausgangsgewicht der Probe abzüglich des Gewichts der EPS-Platte entspricht dem 0%-Wert der Trocknung. Das Gewicht bei Massenkonstanz abzüglich des Gewichts der EPS-Platte entspricht dem 100%-Wert der Trocknung. Über diese beiden Gewichte kann der 98%-Wert der Trocknung berechnet werden. Am Schnittpunkt der Trocknungskurve mit dem 98%-Wert wird die jeweilige Trocknungszeit abgelesen.

## Patentansprüche

1. Putzmasse zur Ausbildung einer ein- oder mehrlagigen Putzschicht, insbesondere einer Armierungsschicht, enthaltend

   - mindestens ein Polymerbindemittel,
   - Füllstoffe,
   - Additive und
   - Wasser,

   wobei die Füllstoffe in einer mindestens trimodalen Partikelgrößenverteilung vorliegen, umfassend

   - mindestens einen Grobfüllstoff mit einer mittleren Partikelgröße D50 von 100-500 $\mu$m, vorzugsweise 140-400 $\mu$m, weiterhin vorzugsweise 160-350 $\mu$m,
   - mindestens einen Feinfüllstoff mit einer mittleren Partikelgröße D50 von 30-100 $\mu$m, vorzugsweise 35-90 $\mu$m, weiterhin vorzugsweise 40-75 $\mu$m und
   - mindestens einen Feinstfüllstoff mit einer mittleren Partikelgröße D50 von 1-30 $\mu$m, vorzugsweise 2-26 $\mu$m, weiterhin vorzugsweise 2-24 $\mu$m,

   und wobei der mindestens eine Feinfüllstoff ein Leichtfüllstoff mit einer Kornrohdichte nach DIN EN 1097-6 unter 500 kg/m$^3$, vorzugsweise unter 400 kg/m$^3$, weiterhin vorzugsweise unter 300 kg/m$^3$, ist.

2. Putzmasse nach Anspruch 1,
   **dadurch gekennzeichnet, dass** der Leichtfüllstoff eine mittlere Kornfestigkeit nach DIN EN 13055-1 von mindestens 1,2 N/mm$^2$, vorzugsweise mindestens 1,6 N7mm$^2$, weiterhin vorzugsweise mindestens 1,8 N/mm$^2$, aufweist.

3. Putzmasse nach Anspruch 1 oder 2,
   **dadurch gekennzeichnet, dass** der Leichtfüllstoff ein Hydrophobierungsmittel zur Hydrophobierung der Oberfläche der Leichtfüllstoffpartikel enthält.

4. Putzmasse nach einem der vorhergehenden Ansprüche,
   **dadurch gekennzeichnet, dass** jeweils bezogen auf das Gesamtgewicht der Ausgangsstoffe

   - 50-75 Gew.-%, vorzugsweise 50-70 Gew.-%, weiterhin vorzugsweise 55-70 Gew.-% des mindestens einen Grobfüllstoffs,
   - 1-10 Gew.-%, vorzugsweise 1-7 Gew.-%, weiterhin vorzugsweise 1-5 Gew.-% des mindestens einen Feinfüllstoffs
   - 5-25 Gew.-%, vorzugsweise 5-20 Gew.-%, weiterhin vorzugsweise 6-15 Gew.-% des mindestens einen Feinstfüllstoffs

   enthalten sind.

5. Putzmasse nach einem der vorhergehenden Ansprüche,
   **dadurch gekennzeichnet, dass** bezogen auf das Gesamtgewicht der Ausgangsstoffe der Feststoffanteil des mindestens einen Polymerbindemittels 4-15 Gew.-%, vorzugsweise 4-12 Gew.-%, weiterhin vorzugsweise 5-10 Gew.-% beträgt.

6. Putzmasse nach einem der vorhergehenden Ansprüche,

**dadurch gekennzeichnet, dass** das mindestens eine Polymerbindemittel eine Mindestfilmtemperatur unter 15°C, vorzugsweise unter 12°C, weiterhin vorzugsweise unter 9°C aufweist.

7. Putzmasse nach einem der vorhergehenden Ansprüche,
   **dadurch gekennzeichnet, dass** jeweils bezogen auf das Gesamtgewicht der Ausgangsstoffe

   - weniger als 0,5 Gew.-%, vorzugsweise weniger als 0,3 Gew.-%, weiterhin vorzugsweise weniger als 0,1 Gew.-%, Filmbildehilfsmittel und/oder
   - weniger als 0,5 Gew.-%, vorzugsweise weniger als 0,3 Gew.-%, weiterhin vorzugsweise weniger als 0,1 Gew.-%, Co-Lösemittel enthalten ist bzw. sind.

8. Putzmasse nach einem der vorhergehenden Ansprüche,
   **dadurch gekennzeichnet, dass** ein Verdicker auf Acrylat-Basis als Additiv enthalten ist, der vorzugsweise einen Verdicker auf Cellulose-Basis ersetzt, wobei weiterhin vorzugsweise 0,1-2,0 Gew.-% des Verdickers bezogen auf das Gesamtgewicht der Ausgangsstoffe enthalten sind.

9. Putzmasse nach Anspruch 8,
   **dadurch gekennzeichnet, dass** weitere Additive, beispielsweise Konservierungsmittel, Fasern, Netz-/Dispergiermittel, Entschäumer und/oder Hydrophobierungsmittel, enthalten sind, wobei vorzugsweise 0,1-5,0 Gew.-% weitere Additive bezogen auf das Gesamtgewicht der Ausgangsstoffe enthalten sind.

10. Putzmasse nach einem der vorhergehenden Ansprüche,
    **dadurch gekennzeichnet, dass** jeweils bezogen auf das Gesamtgewicht der Ausgangsstoffe

    | | |
    |---|---|
    | 4,0-15,0 Gew.-% | mindestens eines Polymerbindemittels (Feststoff) |
    | 50,0-75,0 Gew.-% | mindestens eines Grobfüllstoffs |
    | 1,0-10,0 Gew.-% | mindestens eines Feinfüllstoffs |
    | 5,0-25,0 Gew.-% | mindestens eines Feinstfüllstoffs |
    | 5,0-25,0 Gew.-% | Wasser |
    | 0,1-2,0 Gew.-% | Verdicker |
    | 0,1-5,0 Gew.-% | weitere Additive enthalten sind. |

11. Ein- oder mehrlagige Putzschicht, insbesondere Armierungsschicht, aus einer Putzmasse nach einem der vorhergehenden Ansprüche.

12. Putzsystem, umfassend eine aus einer Putzmasse nach einem der Ansprüche 1 bis 10 ausgebildete ein- oder mehrlagige Putzschicht, insbesondere Armierungsschicht, sowie mindestens eine weitere Putzschicht, vorzugsweise eine Oberputzschicht.

13. Putzsystem nach Anspruch 12,
    **dadurch gekennzeichnet, dass** das Putzsystem zur Ausbildung eines Wärmedämmverbundsystems auf eine Dämmschicht aufgebracht ist.

## Figur

EP 4 438 578 A1

**EUROPÄISCHER RECHERCHENBERICHT**

Nummer der Anmeldung

EP 23 16 4346

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2015 121201 A1 (HEKA GRAPHIT TECH UG [DE]) 9. Juni 2016 (2016-06-09) | 1,3,6-9, 11,12 | INV. C04B26/06 |
| A | * Absatz [0002] * | 2,4,5, | |
| | * Absätze [0071], [0073]; Beispiel 3 * | 10,13 | |
| | ----- | | |
| A | US 2012/071588 A1 (INGRISCH STEFAN [DE] ET AL) 22. März 2012 (2012-03-22) | 1 | |
| | * Absätze [0037], [0038] * | | |
| | * Absatz [0053]; Beispiel 5 * | | |
| | ----- | | |
| A | US 2018/142107 A1 (WEIER ANDREAS [DE] ET AL) 24. Mai 2018 (2018-05-24) | 1 | |
| | * Absätze [0029], [0030], [0033], [0034], [0039] * | | |
| | * Absatz [0047] – Absatz [0048] * | | |
| | * Absatz [0100] – Absatz [0103] * | | |
| | * Ansprüche 1-8,12 * | | |
| | ----- | | |
| A | EP 3 689 985 A1 (HECK WALL SYSTEMS GMBH [DE]; ROCKWOOL INT [DK]) 5. August 2020 (2020-08-05) | 1 | |
| | * Ansprüche 1,5,6,8,9,10 * | | RECHERCHIERTE SACHGEBIETE (IPC) |
| | * Ansprüche 11,15 * | | |
| | ----- | | C04B |
| A | EP 2 593 412 B1 (SIKA TECH AG [CH]) 5. Januar 2022 (2022-01-05) | 1 | |
| | * Absatz [0035] * | | |
| | * Absätze [0063], [0065]; Beispiele 3,4 * | | |
| | * Ansprüche 1-5 * | | |
| | ----- | | |
| A | EP 3 156 382 A1 (DAW SE [DE]) 19. April 2017 (2017-04-19) | 1 | |
| | * Absatz [0026] – Absatz [0027] * | | |
| | * Ansprüche 1,2,11,20 * | | |
| | ----- | | |
| A | EP 3 257 902 A1 (DAW SE [DE]) 20. Dezember 2017 (2017-12-20) | 1 | |
| | * Ansprüche 1-11 * | | |
| | ----- | | |
| | -/-- | | |

Der vorliegende Recherchenbericht wurde für alle Patentansprüche erstellt

| Recherchenort | Abschlußdatum der Recherche | Prüfer |
|---|---|---|
| Den Haag | 26. September 2023 | Kolb, Ulrike |

EPO FORM 1503 03.82 (P04C03)

Seite 1 von 2

Europäisches
Patentamt

European
Patent Office

Office européen
des brevets

# EUROPÄISCHER RECHERCHENBERICHT

Nummer der Anmeldung

**EP 23 16 4346**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2013/190430 A1 (GOZUM JOHN E [US] ET AL) 25. Juli 2013 (2013-07-25) * Absatz [0030] – Absatz [0031] * * Ansprüche 1-3,17,18,21 * ----- | 1 | |
| A | US 2012/121921 A1 (COSYNS AUDREY [DE] ET AL) 17. Mai 2012 (2012-05-17) * Absatz [0114] * * Absatz [0144] – Absatz [0148] * * Absatz [0212] – Absatz [0214] * ----- | 1 | |
| A | US 2015/176267 A1 (CASIMIRO JESSIE [FR] ET AL) 25. Juni 2015 (2015-06-25) * Absatz [0152]; Tabelle 1 * * Ansprüche 1,3,6-8 * ----- | 1 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| Den Haag | 26. September 2023 | Kolb, Ulrike |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

`EP 23 16 4346`

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

`26-09-2023`

| Im Recherchenbericht angeführtes Patentdokument | Datum der Veröffentlichung | Mitglied(er) der Patentfamilie | Datum der Veröffentlichung |
|---|---|---|---|
| DE 102015121201 A1 | 09-06-2016 | AU 2015356990 A1 | 27-07-2017 |
| | | DE 102015121201 A1 | 09-06-2016 |
| | | EA 201700287 A1 | 28-06-2019 |
| | | EP 3253722 A1 | 13-12-2017 |
| | | ES 2866648 T3 | 19-10-2021 |
| | | WO 2016087673 A1 | 09-06-2016 |
| US 2012071588 A1 | 22-03-2012 | BR PI1013035 A2 | 18-08-2020 |
| | | CN 102428054 A | 25-04-2012 |
| | | DE 102009003196 A1 | 25-11-2010 |
| | | EP 2432748 A1 | 28-03-2012 |
| | | KR 20120023682 A | 13-03-2012 |
| | | US 2012071588 A1 | 22-03-2012 |
| | | WO 2010133468 A1 | 25-11-2010 |
| US 2018142107 A1 | 24-05-2018 | CA 2985245 A1 | 17-11-2016 |
| | | CN 107636091 A | 26-01-2018 |
| | | EP 3294683 A1 | 21-03-2018 |
| | | EP 3686173 A1 | 29-07-2020 |
| | | JP 6577055 B2 | 18-09-2019 |
| | | JP 2018524413 A | 30-08-2018 |
| | | PL 3294683 T3 | 28-12-2020 |
| | | SG 11201709162Q A | 28-12-2017 |
| | | US 2018142107 A1 | 24-05-2018 |
| | | WO 2016180454 A1 | 17-11-2016 |
| EP 3689985 A1 | 05-08-2020 | KEINE | |
| EP 2593412 B1 | 05-01-2022 | EP 2593412 A2 | 22-05-2013 |
| | | PL 2593412 T3 | 02-05-2022 |
| EP 3156382 A1 | 19-04-2017 | KEINE | |
| EP 3257902 A1 | 20-12-2017 | KEINE | |
| US 2013190430 A1 | 25-07-2013 | AU 2013209921 A1 | 14-08-2014 |
| | | BR 112014017849 A2 | 20-06-2017 |
| | | CA 2861906 A1 | 25-07-2013 |
| | | EP 2804910 A1 | 26-11-2014 |
| | | MX 337314 B | 25-02-2016 |
| | | NZ 627608 A | 27-11-2015 |
| | | US 2013190430 A1 | 25-07-2013 |
| | | US 2015018454 A1 | 15-01-2015 |
| | | US 2015210881 A1 | 30-07-2015 |
| | | US 2015299418 A1 | 22-10-2015 |
| | | WO 2013109576 A1 | 25-07-2013 |

Für nähere Einzelheiten zu diesem Anhang : siehe Amtsblatt des Europäischen Patentamts, Nr.12/82

EPO FORM P0461

`Seite 1 von 2`

**ANHANG ZUM EUROPÄISCHEN RECHERCHENBERICHT**
**ÜBER DIE EUROPÄISCHE PATENTANMELDUNG NR.**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-09-2023

| Im Recherchenbericht angeführtes Patentdokument | Datum der Veröffentlichung | Mitglied(er) der Patentfamilie | Datum der Veröffentlichung |
|---|---|---|---|
| US 2012121921 A1 | 17-05-2012 | CN 102471632 A | 23-05-2012 |
| | | EP 2456836 A1 | 30-05-2012 |
| | | ES 2562528 T3 | 04-03-2016 |
| | | PT 2456836 E | 30-07-2015 |
| | | US 2012121921 A1 | 17-05-2012 |
| | | WO 2011009874 A1 | 27-01-2011 |
| US 2015176267 A1 | 25-06-2015 | EP 2886523 A1 | 24-06-2015 |
| | | FR 3015474 A1 | 26-06-2015 |
| | | RU 2014151475 A | 10-07-2016 |
| | | US 2015176267 A1 | 25-06-2015 |

EPO FORM P0461

Für nähere Einzelheiten zu diesem Anhang : siehe Amtsblatt des Europäischen Patentamts, Nr.12/82

Seite 2 von 2